## Europäisches Patentamt

## European Patent Office

## Office européen des brevets

(11) Numéro de publication: **0 266 263 B1**

# (12) FASCICULE DE BREVET EUROPEEN

(45) Date de publication du fascicule du brevet:
**20.09.89**

(51) Int. Cl.⁴: **B64C 11/14**

(21) Numéro de dépôt: 87402334.4

(22) Date de dépôt: **19.10.87**

(54) Perfectionnements apportés aux hélices aériennes notamment pour propulseurs d'aéronef.

(30) Priorité: **23.10.86 FR 8614722**

(43) Date de publication de la demande:
**04.05.88 Bulletin 88/18**

(45) Mention de la délivrance du brevet:
**20.09.89 Bulletin 89/38**

(84) Etats contractants désignés:
**DE GB IT**

(56) Documents cités:
**FR-A- 2 365 482**
**GB-A- 858 706**

**NASA CONTRACTOR REPORT 3047, 1978, pages 8-48;
D.M. BLACK et al.: "Aerodynamic design and
performance testing of an advanced 30 degrees swept,
eight bladed propeller at mach numbers
from 0.2 to 0.85"**

(73) Titulaire: **Office National d'Etudes et de Recherches Aérospatiales (O.N.E.R.A.), 29 Avenue de la Division Leclerc, F-92320 Châtillon-sous-Bagneux(FR)**

(72) Inventeur: **Bousquet, Jean-Marc, 246, rue de la Convention, F-75015 Paris(FR)**
Inventeur: **Faubert, Alain, 18, rue Racine, F-78960 Voisins Le Bretonneux(FR)**

(74) Mandataire: **Jacquelin, Marc-Henri et al, Cabinet PLASSERAUD 84, rue d'Amsterdam, F-75009 Paris(FR)**

ACTORUM AG

## Description

La présente invention converne les hélices aériennes, notamment pour propulseurs d'aéronef.

On sait que le rendement théorique d'une hélice, pour une charge au disque $C = P/D^2$ donnée (P étant la puissance sur l'arbre d'hélice et D le diamètre), augmente avec la vitesse de rotation de l'hélice. Mais l'adoption d'une vitesse de rotation élevée se heurte à un problème : la composition de la vitesse due à la rotation de l'hélice et de la vitesse d'avancement de l'aéronef conduit à des nombres de Mach relatifs qui augmentent progressivement depuis l'embase de la pale jusqu'à son extrémité. Sur les hélices classiques, le nombre de Mach atteint fréquemment des valeurs de l'ordre de 0,9 même lorsque les vitesses d'avancement sont modérées, par exemple de l'ordre de M = 0,6. A ces nombres de Mach relatifs élevés apparaissent déjà, sur des profils minces classiques, des ondes de choc intenses provoquant le décollement de la coche limite et conduisant à des niveaux de perte élevés. En conséquence, le rendement propulsif des hélices classiques décroît rapidement, à vitesse d'hélice donnée, lorsque la vitesse de l'aéronef augmente, ce qui a conduit à remplacer les propulseurs à hélice par d'autres types de propulseurs, notamment par des turboréacteurs, lorsque la vitesse des aéronefs dépasse M = 0,65 environ.

De nombreux travaux ont déjà été effectués pour tenter d'accroître, vers des nombres de Mach plus élevés, le domain d'utilisation des hélices.

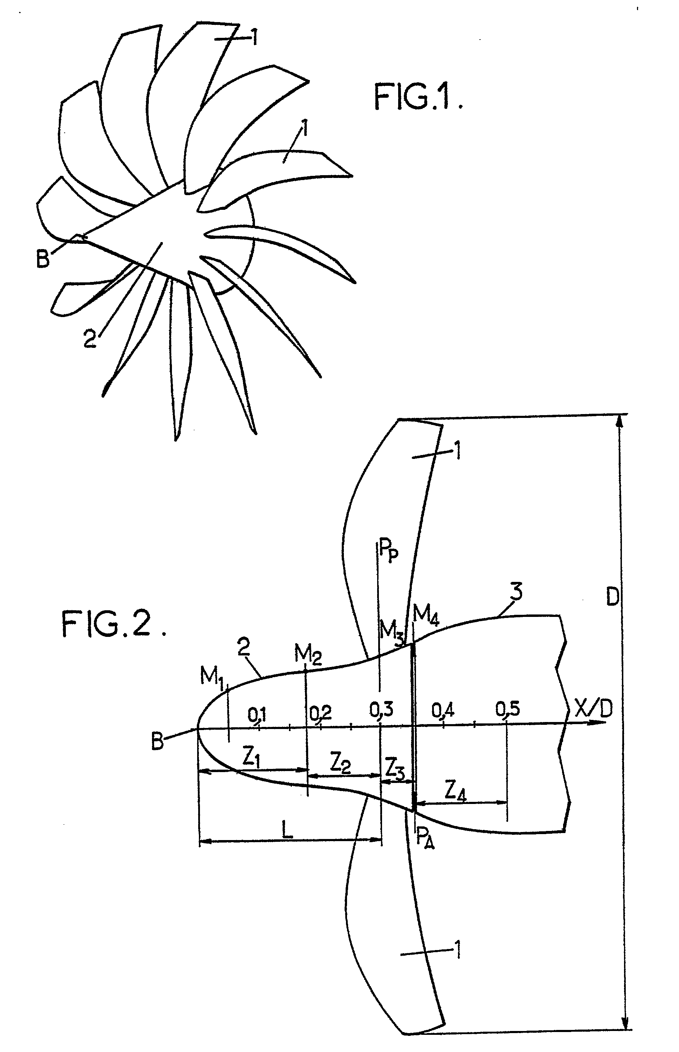

C'est ainsi que l'on a proposé des hélices telles que celle montrée (par une vue en perspective) sur la figure 1 des dessins ci-annexés ; cette hélice comporte un grand nombre de pales 1 (nombre de pales généralement supérieur à huit), sortant d'un capot 2 à distance du bord d'attaque B du capot 2. Ce capot 2 se raccorde à un fuseau moteur (non représenté), fixe en rotation.

Les pales 1 de cette hélice présentent une forme particulière en ce sens que leur extrémité est, en général, recourbée vers l'arrière, par rapport au sens de rotation de l'hélice, et vers l'aval, par rapport au plan de rotation de l'hélice.

Dans des hélices de ce type, l'écoulement dans les parties de pales (embases) plus rapprochées de l'axe de rotation de l'hélice risque de présenter des blocages dans les canaux délimités par les pales, ces blocages provoquant des chocs importatns diminuant le rendement théorique de l'hélice et risquant d'engendrer des décollements de couche limite sur les pales et sur le capot. Un des buts de l'invention est de ralentir localement l'écoulement au niveau de l'embase des pales en ayant recours à une forme de capot appropriée.

Le capot est défini comme un corps de révolution engendré par la rotation d'une ligne méridienne autour de l'axe de rotation de l'hélice, cette ligne méridienne étant repéée par ses coordonnées X et Y portées sur l'axe de rotation de l'hélice et sur un axe radial et rapportées au diamètre de l'hélice, soit :

$$X = \frac{x}{D}$$

$$Y = \frac{r}{D}$$

x désignant l'abscisse, r le rayon et D le diamètre de l'hélice.

Cette ligne méridienne est caractérisée par sa courbure C définie par :

$$\frac{1}{C} = \frac{[1 + (dY/dX)^2]^{3/2}}{d^2Y/dX^2}$$

La position des pales par rapport au capot est repérée par la distance L séparant le bord d'attaque du capot et le plan des pales défini comme étant le plan perpendiculaire à l'axe de rotation de l'hélice et passant par son centre.

Par rapport à l'état de la technique (voir par exemple FR-A 2 365 482) qui décrit déjà une hélice comportant une pluralité de pales sortant d'un capot à une distance du bord d'attaque dudit capot, l'invention se caractérise en ce que le susdit capot est défini par une ligne méridienne présentant :
- à son origine, constituant le bord d'attaque du capot, une courbure maximum supérieure à 15,
- entre son origine et un premier point d'abscisse relative X = x/D égal à 0,05, D étant le diamètre de l'hélice, une courbure décroissant rapidement de la valeur maximum à environ une valeur de 7,
- entre ce premier point et un deuxième point situé à une distance du bord d'attaque comprise entre 0,5 et 0,7 fois la distance L bord d'attaque-plan des pales, une courbure décroissant sensiblement linéairement de la valeur de 7 à une valeur de 0,
- entre ce deuxième point et un troisième point situé dans le plan des pales, une courbure décroissant plus lentement que la susdite décroissance linéaire, de la valeur de 0 à une valeur minimum comprise entre -3 et -5,
- entre ce troisième point et un quatrième point situé dans le plan arrière du capot, une courbure croissant rapidement de la valeur minimum à une valeur de 0.

Avantageusement le fuseau moteur qui se raccorde au capot présente une ligne méridienne prolongeant celle du capot et dont la courbure croît de la valeur 0 à environ une valeur de 3 à une distance relative de 0,10 à 0,15 en aval du plan arrière du capot, puis décroît de la valeur de 3 à environ une valeur de 1 à une distance relative de 0,40 à 0,45 en aval du plan arrière du capot.

L'invention consiste, mise à part la disposition principale ci-dessus, en certaines autres dispositions qui s'utilisent de préférence en même temps et dont il sera plus explicitement question ci-après.

L'invention pourra, de toute façon, être bien comprise à l'aide du complément de description qui suit ainsi que des dessins ci-annexés, lesquels compléments et dessins sont relatifs à un mode de réalisation préféré de l'invention et ne comportent, bien entendu, aucun caractère limitatif.

La figure 1 est une vue en perspective d'une hélice à laquelle on se propose d'appliquer les perfectionnements selon l'invention

La figure 2 est une vue schématique d'une hélice dont le capot est établi conformément à l'invention.

La figure 3 est une courbe montrant l'évolution de la courbure du capot de l'hélice représentée sur la figure 2.

La figure 4 est une courbe montrant les résultats obtenus avec une hélice classique et avec une hélice dont le capot est établi conformément à l'invention.

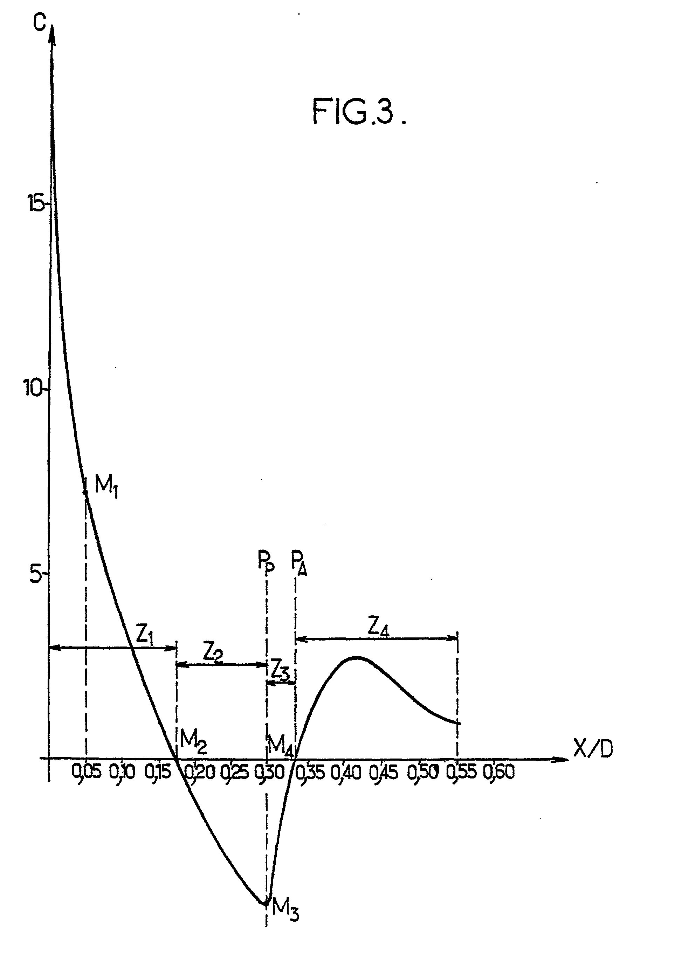

En se référant au système de coordonnées défini précédemment et aux figures 2 et 3, l'hélice conforme à l'invention comporte une pluralité de pales 1 sortant d'un capot 2 à une distance L du bord d'attaque B dudit capot, le susdit capot étant défini par une ligne méridienne présentant :
- à son origine 0, constituant le bord d'attaque B du capot, une courbure maximum supérieure à 15,
- entre son origine 0 et un premier point $M_1$ d'abscisse relative $X = x/D$ égal à 0,05, une courbure décroissant rapidement de la valeur maximum à environ une valeur de 7,
- entre ce premier point $M_1$ et un deuxième point $M_2$ situé à une distance $L_2$ du bord d'attaque comprise entre 0,5 et 0,7 fois la distance L bord d'attaque-plan des pales, une courbure décroissant sensiblement linéairement de la valeur de 7 à une valeur de 0,
- entre ce deuxième point $M_2$ et un troisième point $M_3$ situé dans le plan des pales $P_p$, une courbure décroissant plus lentement que la susdite décroissance linéaire, de la valeur de 0 à une valeur minimum comprise entre -3 et -5,
- entre ce troisième point $M_3$ et un quatrième point $M_4$ situé dans le plan arrière $P_A$ du capot, une courbure croissant rapidement de la valeur minimum à une valeur de 0.

Le capot présente donc :
- une première zone $Z_1$, entre le bord d'attaque B et le deuxième point $M_2$, dans laquelle la courbure décroît d'abord assez rapidement de sa valeur maximale à une valeur de 7 environ, puis ensuite décroît moins rapidement, d'une valeur d'environ 7 à sa valeur nulle,
- une deuxième zone $Z_2$, entre le deuxième point $M_2$ et le plan des pales $P_p$, dans laquelle la courbure est négative et décroit encore plus lentement jusqu'à sa valeur minimale, et
- une troisième zone $Z_3$, entre le plan des pales et le plan arrière $P_A$ du capot, dans laquelle la courbure croît rapidement de sa valeur minimale à une valeur nulle.

Le fuseau moteur 3 qui se raccorde au capot 2 présente une ligne méridienne prolongeant celle du capot et dont la courbure croît de la valeur 0 à environ une valeur de 3 à une distance relative de 0,10, à 0,15 en aval du plan arrière du capot, puis décroît de la valeur de 3 à environ une valeur de 1 à une distance relative de 0,40, à 0,45 en aval du plan arrière du capot.

Le fuseau moteur présente donc une zone, dite quatrième zone $Z_4$, prolongeant la dernière zone $Z_3$ du capot dont la courbure varie assez rapidement en suivant d'abord une croissance puis une décroissance.

Cette variante de la courbure de la ligne méridienne constituant le capot de l'hélice et le début du fuseau moteur est clairement montrée sur la figure 3 sur laquelle on a porté, en abscisses, les distances relatives (X/D) comptées sur l'axe de rotation de l'hélice, et en ordonnées, la courbure C.

A titre d'exemple, la ligne méridienne constituant le capot de l'hélice et le début du fuseau moteur, peut être constituée par les tronçons de courbes suivants, dans le système cartésien X,Y dans lequel $X = x/D$ et $Y = r/D$
- pour $0 < X \leq \alpha_{\mu\rho}$ 0,3
$Y = 0,3271995\, x^{1/2} - 2,422616\, X^2 + 5,697069\, X^3$
- pour $0,3 \leq \alpha_{\mu\rho} X \leq \alpha_{\mu\rho}$ 0,55
$Y = 2,996639 - 38,21174\, X + 200,4801\, X^2 - 538,7765\, X^3 + 794,8556\, X^4 - 615,5586\, X^5 + 196,3246\, X^6$

Un autre exemple donne, pour le capot et le fuseau moteur la ligne méridienne définie dans le tableau ci-dessous qui reprend point par point les cotes de cette ligne dans le même système cartésien X, Y, la notation $E \pm W$ signifiant $10 \pm W$

| X | Y |
|---|---|
| 0. | 0. |
| .1250000E−01 | .3621461E−01 |
| .2500000E−01 | .5030967E−01 |
| .3750000E−01 | .6025554E−01 |
| .5000000E−01 | .6781963E−01 |
| .6250000E−01 | .7372742E−01 |
| .7500000E−01 | .7838351E−01 |
| .8750000E−01 | .8205535E−01 |
| .1000000E+00 | .8494048E−01 |
| .1125000E+00 | .8719646E−01 |
| .1250000E+00 | .8895621E−01 |
| .1375000E+00 | .9033639E−01 |
| .1500000E+00 | .9144257E−01 |
| .1625000E+00 | .9237234E−01 |
| .1750000E+00 | .9321749E−01 |
| .1875000E+00 | .9406537E−01 |
| .2000000E+00 | .9499998E−01 |
| .2125000E+00 | .9160265E−01 |
| .2250000E+00 | .9745259E−01 |
| .2375000E+00 | .9912732E−01 |
| .2500000E+00 | .1012030E+00 |
| .2625000E+00 | .1037544E+00 |
| .2750000E+00 | .1068558E+00 |
| .2875000E+00 | .1105801E+00 |
| .3000000E+00 | .1150000E+00 |
| .3104167E+00 | .1192282E+00 |
| .3208333E+00 | .1237836E+00 |
| .3312500E+00 | .1284998E+00 |
| .3416667E+00 | .1332382E+00 |
| .3520833E+00 | .1378875E+00 |
| .3625000E+00 | .1423614E+00 |
| .3729167E+00 | .1465950E+00 |
| .3833333E+00 | .1505422E+00 |
| .3937500E+00 | .1541728E+00 |
| .4041667E+00 | .1574703E+00 |
| .4145833E+00 | .1604294E+00 |
| .4250000E+00 | .1630536E+00 |
| .4354167E+00 | .1653538E+00 |
| .4458333E+00 | .1673461E+00 |
| .4562500E+00 | .1690503E+00 |
| .4666667E+00 | .1704886E+00 |
| .4770833E+00 | .1716840E+00 |
| .4875000E+00 | .1726598E+00 |
| .4979167E+00 | .1734383E+00 |
| .5083333E+00 | .1740401E+00 |
| .5187500E+00 | .1744838E+00 |
| .5291667E+00 | .1747857E+00 |
| .5395833E+00 | .1749592E+00 |
| .5500000E+00 | .1750155E+00 |

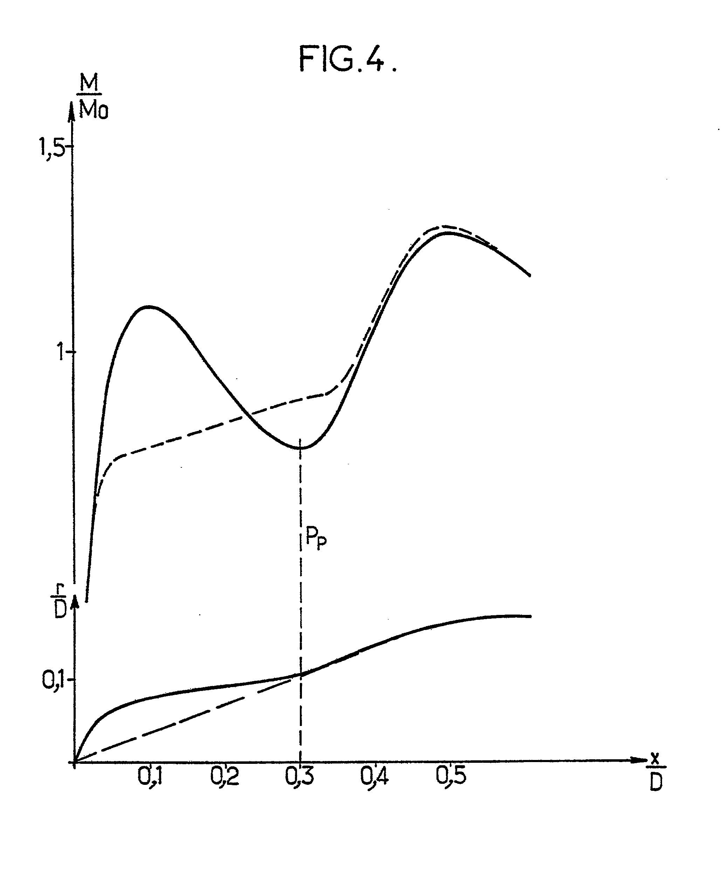

Sur la figure 4 on a représenté un graphique avec en abscisse les distances relatives (x/D) comptées sur l'axe de rotation de l'hélice, et en ordonnées, à la partie inférieure de l'axe des ordonnées, les distances relatives (r/D) comptées dans le plan des pales, et à la partie supérieure de l'axe des ordonnées, le nobmre de Mach relatif (nombre de Mach local/nombre de Mach caractérisant la vitesse) pour un nombre de Mach de 0,7.

Les courbes inférieures sont les lignes médianes du capot suivant l'invention (ligne en trait plein) et d'un capot conique classique (ligne en trait interrompu).

Les courbes supérieures sont les variations de Mach relatifs dans le cas d'un capot suivant l'invention (ligne en trait plein) et d'un capot conique classique (ligne en trait interrompu).

On constate donc qu'au niveau du plan des pales on a un ralentissement sensible du nombre de Mach local, ce qui contribue à éviter les risques de blocage de l'écoulement dans les canaux délimités par les pales.

En ce qui concerne les différents profils à donner à chaque pale associée à un capot présentant les caractéristiques ci-dessus, on peut avoir recours à des profils modernes tels que ceux établis habituellement pour les hélices transsoniques.

Finalement et quel que soit le mode de réalisation adopté, on dispose d'une héice qui peut être utilisée à des nombres de Mach élevés (supérieurs à 0,65) et dans laquelle on évite, grâce à la forme du capot, les phénomènes de blocage de l'écoulement dans les canaux délimités par les pales au niveau de leurs embases. Le rendement de l'hélice ne se trouve donc pas diminué par les chocs ou les décollements de couche limite que de tels phénomènes de blocage risquaient de provoquer.

## Revendications

1. Hélice aérienne, notamment pour propulseur d'aéronef, comprenant une pluralité de pales (1) sortant d'un capot (2) à une distance L du bord d'attaque dudit capot, caractérisée par le fait que le susdit capot par une ligne méridienne présentant :
- à son origine, constituant le bord d'attaque du capot, une courbure maximum supérieure à 15,
- entre son origine et un premier point d'abscisse (M₁) relative X = x/D égal à 0,05, D étant le diamètre de l'hélice, une courbure décroissant rapidement de la valeur maximum à environ une valeur de 7,
- entre ce premier point et un deuxième point (M₂) situé à une distance du bord d'attaque comprise entre 0,5 et 0,7 fois la distance L bord d'attaque-plan des pales, une courbure décroissant sensiblement linéairement de la valeur de 7 à une valeur de 0,
- entre ce deuxième point et un troisième point (M₃) situé dans le plan des pales, une courbure décroissant plus lentement que la susdite décroissance linéaire, de la valeur de 0 à une valeur minimum comprise entre -3 et -5,
- entre ce troisième point et un quatrième point (M₄) situé dans le plan arrière du capot, une courbure croissant rapidement de la valeur minimum à une valeur de 0.

2. Hélice selon la revendication 1, dans laquelle un fuseau moteur (3) se raccorde au capot (2), caractérisée par le fait que le susdit fuseau moteur (3) présente une ligne méridienne prolongeant celle du capot (2) et dont la courbure croît de la valeur 0 à environ une valeur de 3 à une distance relative de 0,10 à 0,15 en aval du plan arrière du capot, puis décroît de la valeur de 3 à environ une valeur de 1 à une distance relative de 0,40 à 0,45 en aval du plan arrière du capot.

3. Hélice selon la revendication 1 ou 2, caractérisée par le fait que la ligne méridienne constituant le capot (2) est constituée par les tronçons de courbes suivants, dans le système cartésien X,Y dont l'origine coïncide avec le bord d'attaque du capot et dans lequel X = x/D et Y = r/D

- pour $0 < X \leq 0,3$

$Y = 0,3271995\ X^{1/2} - 2,422616\ X^2 + 5,697069\ X^3$

- pour $0,3 \leq X \leq 0,55$

$Y = 2,996639 - 38,21174\ X + 200,4801\ X^2 - 538,7765\ X^3 + 794,8556\ X^4 - 615,5586\ X^5 + 196,3246\ X^6$

4. Hélice selon la revendication 1 ou 2, caractérisée par le fait que la ligne méridienne constituant le capot (2) est définie dans le système cartésien X, Y dont l'origine coïncide avec le bord d'attaque du capot et dans lequel X = x/D et Y = r/D, par les cotes suivantes :

| X | Y |
| --- | --- |
| 0. | 0. |
| .1250000E−01 | .3621461E−01 |
| .2500000E−01 | .5030967E−01 |
| .3750000E−01 | .6025554E−01 |
| .5000000E−01 | .6781963E−01 |
| .6250000E−01 | .7372742E−01 |
| .7500000E−01 | .7838351E−01 |
| .8750000E−01 | .8205535E−01 |
| .1000000E+00 | .8494048E−01 |
| .1125000E+00 | .8719646E−01 |
| .1250000E+00 | .8895621E−01 |
| .1375000E+00 | .9033639E−01 |
| .1500000E+00 | .9144257E−01 |
| .1625000E+00 | .9237234E−01 |
| .1750000E+00 | .9321749E−01 |
| .1875000E+00 | .9406537E−01 |
| .2000000E+00 | .9499998E−01 |
| .2125000E+00 | .9160265E−01 |
| .2250000E+00 | .9745259E−01 |
| .2375000E+00 | .9912732E−01 |
| .2500000E+00 | .1012030E+00 |
| .2625000E+00 | .1037544E+00 |
| .2750000E+00 | .1068558E+00 |
| .2875000E+00 | .1105801E+00 |
| .3000000E+00 | .1150000E+00 |
| .3104167E+00 | .1192282E+00 |
| .3208333E+00 | .1237836E+00 |
| .3312500E+00 | .1284998E+00 |
| .3416667E+00 | .1332382E+00 |
| .3520833E+00 | .1378875E+00 |
| .3625000E+00 | .1423614E+00 |
| .3729167E+00 | .1465950E+00 |
| .3833333E+00 | .1505422E+00 |
| .3937500E+00 | .1541728E+00 |
| .4041667E+00 | .1574703E+00 |
| .4145833E+00 | .1604294E+00 |
| .4250000E+00 | .1630536E+00 |
| .4354167E+00 | .1653538E+00 |
| .4458333E+00 | .1673461E+00 |
| .4562500E+00 | .1690503E+00 |
| .4666667E+00 | .1704886E+00 |
| .4770833E+00 | .1716840E+00 |
| .4875000E+00 | .1726598E+00 |
| .4979167E+00 | .1734383E+00 |
| .5083333E+00 | .1740401E+00 |
| .5187500E+00 | .1744838E+00 |
| .5291667E+00 | .1747857E+00 |
| .5395833E+00 | .1749592E+00 |
| .5500000E+00 | .1750155E+00 |

## Claims

1. Aerial propeller, particularly for aircraft propulsive units, having a plurality of blades (1) projecting from a cowling (2) at a distance L from, the leading edge of said cowling, characterized the fact that said cowling (2) is defined by a meridian line having:
— at its origin, forming the leading edge of the cowling, a maximum curvature greater than 15,
— between its origin and a first relative abscissa point ($M_1$) X = x/D equals 0.05 (D being the diameter of the propeller), a curvature decreasing rapidly from the maximum value to about a value of 7,
— between this first point and a second point ($M_2$) situated at a distance from the leading edge between 0.5 and 0.7 times the leading edge-blade plane distance L, a curvature decreasing substantially linearly from a value 7 to a value 0,
— between this second point and a third point ($M_3$) situated in the plane of the blades, a curvature decreasing more slowly than said linear decrease, from value 0 to a minimum value between -3 and -5,
— between this third point and a fourth point ($M_4$) situated in the rear plane of the cowling, a curvature increasing rapidly from a minimum value to a value of 0.

2. Propeller according to claim 1, in which an engine nacelle (3) is joined to the cowling (2), characterized by the fact that said engine nacelle (3) has a meridian line, extending that of the cowling (2), whose curvature increases from the value 0 to a value of about 3 at a relative distance of 0.10 to 0.15 downstream of the rear plane of the cowling, then decreases from value 3 to a value of about 1 at a relative distance of 0.40 to 0.45 downstream of the rear plane of the cowling

3. Propeller according to claim 1 or 2, characterized by the fact that the meridian line forming the cowling (2) is formed by the following curved sections, in the Cartesian system X, Y whose origin coincides with the leading edge of the cowling and in which X = x/D and Y = r/D
— for $0 < X \leq 0.3$
$Y = 0.3271995\, X^{1/2} - 2.422616\, X^2 + 5.697069\, X^3$
— for $0.3 \leq X \leq 0.3$
$Y = 2.996639 - 38.21174\, X + 200.4801\, X^2 - 538.7765\, X^3 + 794.8556\, X^4 - 615.5586\, X^5 + 196.3246\, X^6$

4. Propeller according to claim 1 or 2, characterized by the fact that the meridian line forming the cowling (2) is defined, in the Cartesian system X, Y whose origin coincides with the leading edge of the cowling and in which X = x/D and Y = r/D, by the following dimensions:

| X | Y |
|---|---|
| 0. | 0. |
| .1250000E–01 | .3621461E–01 |
| .2500000E–01 | .5030967E–01 |
| .3750000E–01 | .6025554E–01 |
| .5000000E–01 | .6781963E–01 |
| .6250000E–01 | .7372742E–01 |
| .7500000E–01 | .7838351E–01 |
| .8750000E–01 | .8205535E–01 |
| .1000000E+00 | .8494048E–01 |
| .1125000E+00 | .8719646E–01 |
| .1250000E+00 | .8895621E–01 |
| .1375000E+00 | .9033639E–01 |
| .1500000E+00 | .9144257E–01 |
| .1625000E+00 | .9237234E–01 |
| .1750000E+00 | .9321749E–01 |
| .1875000E+00 | .9406537E–01 |
| .2000000E+00 | .9499998E–01 |
| .2125000E+00 | .9160265E–01 |
| .2250000E+00 | .9745259E–01 |
| .2375000E+00 | .9912732E–01 |
| .2500000E+00 | .1012030E+00 |
| .2625000E+00 | .1037544E+00 |
| .2750000E+00 | .1068558E+00 |
| .2875000E+00 | .1105801E+00 |
| .3000000E+00 | .1150000E+00 |
| .3104167E+00 | .1192282E+00 |
| .3208333E+00 | .1237836E+00 |
| .3312500E+00 | .1284998E+00 |
| .3416667E+00 | .1332382E+00 |
| .3520833E+00 | .1378875E+00 |
| .3625000E+00 | .1423614E+00 |
| .3729167E+00 | .1465950E+00 |
| .3833333E+00 | .1505422E+00 |
| .3937500E+00 | .1541728E+00 |
| .4041667E+00 | .1574703E+00 |
| .4145833E+00 | .1604294E+00 |
| .4250000E+00 | .1630536E+00 |
| .4354167E+00 | .1653538E+00 |
| .4458333E+00 | .1673461E+00 |
| .4562500E+00 | .1690503E+00 |
| .4666667E+00 | .1704886E+00 |
| .4770833E+00 | .1716840E+00 |
| .4875000E+00 | .1726598E+00 |
| .4979167E+00 | .1734383E+00 |
| .5083333E+00 | .1740401E+00 |
| .5187500E+00 | .1744838E+00 |
| .5291667E+00 | .1747857E+00 |
| .5395833E+00 | .1749592E+00 |
| .5500000E+00 | .1750155E+00 |

**Patentansprüche**

1. Luftschraube, insbesondere für einen Luftfahrzeugpropeller, aufweisend eine Anzahl von Blättern (1), die aus einer Haube (2) in einem Abstand L von der Angriffskante der Haube austreten, dadurch gekennzeichnet, daß die Haube (2) durch eine Meridianlinie definiert ist, aufweisend:
– an ihrem die Angriffskante der Haube bildenden Ursprung eine maximale Krümmung größer als 15,
– zwischen ihrem Ursprung und einem ersten relativen Abszissenpunkt ($M_1$) $X = x/D$ gleich 0,05, wobei D der Durchmesser der Luftschraube ist, eine vom maximalen Wert zu ungefähr einem Wert 7 rasch abnehmende Krümmung,
– zwischen diesem ersten Punkt und einem zweiten Punkt ($M_2$), der in einem Abstand von der Angriffskante einschließlich zwischen 0,5 und 0,7 mal dem Abstand L Angriffskante-Ebene der Blätter liegt, eine im wesentlichen linear vom Wert 7 zu einem Wert 0 abnehmende Krümmung,
– zwischen diesem zweiten Punkt und einem dritten Punkt ($M_3$), der in der Ebene der Blätter liegt, eine langsamer als die lineare Abnahme vom Wert 0 zu einem minimalen Wert einschließlich zwischen -3 und -5 abnehmende Krümmung,
– zwischen diesem dritten Punkt und einem vierten Punkt ($M_4$), der in der rückwärtigen Ebene der Haube liegt, eine vom minimalen Wert zu einem Wert 0 rasch zunehmende Krümmung.

2. Luftschraube nach Anspruch 1, in der ein Antriebsstummel (3) mit der Haube (2) verbunden ist, dadurch gekennzeichnet, daß der Antriebsstummel eine Meridianlinie aufweist, die diejenige der Haube (2) verlängert und deren Krümmung vom Wert 0 bis zu ungefähr einem Wert 3 in einem relativen Abstand von 0,10 bis 0,15 stromabwärts der rückwärtigen Ebene der Haube zunimmt, dann vom Wert 3 zu ungefähr einem Wert 1 in einem relativen Abstand von 0,40 bis 0,45 stromabwärts der rückwärtigen Ebene der Haube abnimmt.

3. Luftschraube nach Anspruch 1 oder 2, dadurch gekennzeichnet, daß die die Haube (2) bildende Meridianlinie durch Teilstücke von folgenden Kurven im kartesischen System X, Y, dessen Ursprung mit der Angriffskante der Haube zusammenfällt und in dem $X = x/D$ und $Y = r/D$, gebildet ist,
– für $0 < X \leq 0,3$
$Y = 0,3271995\ X^{1/2} - 2,422616\ X^2 + 5,697069\ X^3$
– für $0,3 \leq X \leq 0,55$
$Y = 2,996639 - 38,21174\ X + 200,4801\ X^2 - 538,7765\ X^3 + 794,8556\ X^4 - 615,5586\ X^5 + 196,3246\ X^6$.

4. Luftschraube nach Anspruch 1 oder 2, dadurch gekennzeichnet, daß die die Haube (2) bildende Meridianlinie im kartesischen System X, Y, dessen Ursprung mit der Angriffskante der Haube zusammenfällt und in dem $X = x/D$ und $Y = r/D$, durch die folgenden Daten definiert ist:

| X | Y |
|---|---|
| 0. | 0. |
| .1250000E–01 | .3621461E–01 |
| .2500000E–01 | .5030967E–01 |
| .3750000E–01 | .6025554E–01 |
| .5000000E–01 | .6781963E–01 |
| .6250000E–01 | .7372742E–01 |
| .7500000E–01 | .7838351E–01 |
| .8750000E–01 | .8205535E–01 |
| .1000000E+00 | .8494048E–01 |
| .1125000E+00 | .8719646E–01 |
| .1250000E+00 | .8895621E–01 |
| .1375000E+00 | .9033639E–01 |
| .1500000E+00 | .9144257E–01 |
| .1625000E+00 | .9237234E–01 |
| .1750000E+00 | .9321749E–01 |
| .1875000E+00 | .9406537E–01 |
| .2000000E+00 | .9499998E–01 |
| .2125000E+00 | .9160265E–01 |
| .2250000E+00 | .9745259E–01 |
| .2375000E+00 | .9912732E–01 |
| .2500000E+00 | .1012030E+00 |
| .2625000E+00 | .1037544E+00 |
| .2750000E+00 | .1068558E+00 |
| .2875000E+00 | .1105801E+00 |
| .3000000E+00 | .1150000E+00 |
| .3104167E+00 | .1192282E+00 |
| .3208333E+00 | .1237836E+00 |
| .3312500E+00 | .1284998E+00 |
| .3416667E+00 | .1332382E+00 |
| .3520833E+00 | .1378875E+00 |
| .3625000E+00 | .1423614E+00 |
| .3729167E+00 | .1465950E+00 |
| .3833333E+00 | .1505422E+00 |
| .3937500E+00 | .1541728E+00 |
| .4041667E+00 | .1574703E+00 |
| .4145833E+00 | .1604294E+00 |
| .4250000E+00 | .1630536E+00 |
| .4354167E+00 | .1653538E+00 |
| .4458333E+00 | .1673461E+00 |
| .4562500E+00 | .1690503E+00 |
| .4666667E+00 | .1704886E+00 |
| .4770833E+00 | .1716840E+00 |
| .4875000E+00 | .1726598E+00 |
| .4979167E+00 | .1734383E+00 |
| .5083333E+00 | .1740401E+00 |
| .5187500E+00 | .1744838E+00 |
| .5291667E+00 | .1747857E+00 |
| .5395833E+00 | .1749592E+00 |
| .5500000E+00 | .1750155E+00 |

# FIG.1.

# FIG.2.

FIG.3.

# FIG.4.